(19) Europäisches Patentamt
European Patent Office
Office européen des brevets

(11) Publication number: 0 047 675
A1

(12) EUROPEAN PATENT APPLICATION

(21) Application number: 81304134.0

(22) Date of filing: 09.09.81

(51) Int. Cl.³: C 04 B 19/04, C 04 B 21/08, F 16 L 59/02

(30) Priority: 10.09.80 US 185975

(43) Date of publication of application: 17.03.82 Bulletin 82/11

(84) Designated Contracting States: DE FR GB

(71) Applicant: LEBANON STEEL FOUNDRY, 1st Avenue and Lehman Street, Lebanon, PA 17042 (US)

(72) Inventor: Vogel, Edward Gustav, 301 S. 1st. Avenue, Lebanon PA. 17042 (US)
Inventor: Westlund, Rodney Charles, 116 E. Chestnut Street, St. Michaels MD. 21663 (US)

(74) Representative: Newens, Leonard Eric et al, F.J. CLEVELAND CO. 40/43 Chancery Lane, London WC2A 1JQ (GB)

(54) **A process of making a coherent rigid solid material.**

(57) A method for the production of coherent, rigid solid perlite-silicate insulation is described having improved transverse strenght while retaining excellent insulating characteristics. According to a preferred embodiment, such compositions incorporating a limited amount of phosphate is blow moulded into shapes. These shapes are hardened by exposure to carbon dioxide gas and cured by microwave heating to yield improved insulative shapes having improved resistance to shrinkage higher flexural strength and greater insulating properties.

EP 0 047 675 A1

## DESCRIPTION

This invention relates to a process of making a new coherent rigid solid material particularly adapted for use as an insulating material.

Heating insulating materials are known which are prepared from fillers having at least a 75% reactive expanded perlite content and alkaline ionic silicates. Such materials are formed and cured so as to enable the perlite fraction of the filler to react with the silicate to produce a crystalline reaction product. U.S. Patent No. 3,658,564 discloses such a material and a method of making such a material.

The material of U.S. Patent No. 3,658,564 is made by using an extended curing period of at least three days and preferably seven to achieve relative water insensitivity. Moreover, curing is accomplished under carefully controlled conditions of humidity and temperature during this period. The required curing creates some difficulties in the large scale production of the high temperature insulating material.

In addition, the material of U.S. Patent No. 3,658,564 must be made with specific $SiO_2:K_2$ and $SiO_2:Na_2$ ratios in the alkaline ionic silicates. In particular, water resistive or insensitive products require $SiO_2:Na_2O$ ratios of 3:1 to 4:1 and $SiO_2:K_2$ of 2:1 to 2.6:1 to achieve a water insensitive product. Furthermore, the material of U.S. Patent No. 3,658,564 has a rough surface texture which is undesirable from a cosmetic standpoint. The roughness is also undesirable because of the inability to provide intricate shapes, e.g. mitre joints.

Description of the Prior Art

Addition of clay to certain silicate-perlite compositions is suggested by U.S. Patent No. 3,321,410 issued to Mac Arthur and by 3,203,813 issued to Gajardo. No suggestion of inclusion of clay to phosphate-modified compositions is disclosed by either patent, however.

While the publication Soluble Silicates by Vail, Volume 2, A.C.S. monograph No. 116, Rheinhold p. 398-413, proposes the addition of phosphates to basic or neutral refractories, Vail does not appreciate and, accordingly does not disclose the limited ranges of phosphate suitable for addition to silicate-perlite composition according to the present invention. Neither does the Vail reference recognize the significant improvement in transverse strength of the shaped bodies which may be accomplished by the addition of phosphate to silicate-perlite compositions within the critical ranges taught herein.

## Summary of the Invention

It is a purpose of the invention to provide a method of making a material which is especially useful as heat insulating material.

A further purpose is to provide a method of making such a material which is at once practical and reasonably economical and has especially good strength, low bulk density, low thermal conductivity, and good dimensional stability.

It is also a purpose to provide a method of making a material which has a relatively smooth and cosmetically pleasing texture.

A further purpose is to provide a method of making such a material which has expanded perlite as a major constituent.

A further purpose is to provide a method of making such a material which has relatively good water resistivity, that is, ability to maintain shape and weight and reasonable strength in the face of exposure to water, and even better resistivity as to oil, has a corrosion inhibition property in the presence of such things as chlorides and chlorine, and resistivity to surface burning.

A further purpose is to provide a method of making such a material which can be made by a practical, economical and effective process.

In accordance with these and other purposes of the invention, the process of making a coherent rigid solid material comprises the steps of first mixing the following parts by weight: expanded perlite from about 20 through about 50 parts; from about 9.5 to about 19 parts of sodium silicate or potassium silicate in the form of an aqueous solution thereof; an amount sufficient to improve the transverse strength of said material of a phosphate, said phosphate being substantially soluble in said aqueous solution, and from about 21 to about 67 parts of water, including that found in said aqueous solution. Thereafter, the mixture is cured by subjecting to heat as a result of which there is no longer the original content of water.

BAD ORIGINAL

The materials may be mixed by bringing together expanded perlite and the phosphate as dry materials, adding a slurry including sodium or potassium silicate, and water and mixing until the mixture appears damp and dust free but short of time when the mixture begins to substantially shrink. The mixture is then compressed or blown into shape before subjecting to heat. In the preferred embodiments of the invention, the mixture may be subjected to heat in a hot air oven in a range from 93°C to 99°C with 96°C preferred. In the alternative, the mixture may be subjected to heat by a microwave heating means.

In a preferred embodiment, an organic or inorganic fiber material may also be mixed with the materials. Preferably, the fiber material is from a class comprising fiberglass, heat resistant nylon, mineral wood, and netting; from about 0.5 to about 3 parts by weight are usually preferred.

In accordance with another preferred embodiment of the invention, a clay is included in the formulation. Preferred clays for such inclusion include Bentonite, Kaolin and similar species with Kaolin being still more preferred. In general, amounts of clay weighing from about 20% to about 25% of the total weight of sodium or potassium silicate solids together with the clay are employed. Amounts of clay weighing from about 21% to about 24% of the silicate are preferred. The clay is preferably added together with the dry ingredients and has been found significantly to reduce shrinkage in the resulting insulating materials.

Another preferred embodiment employs certain types of expanded perlite to yield solid materials of improved strength (as a factor of weight) and heat transmission qualities. Thus, a preferred formulation employs perlite having a low density (below about 2.5 pounds per cubic foot).

Still more preferred embodiments employ combination of the above. Thus, a mixture may be formulated comprising low density perlite, silicate,phosphate, water, fibers, and Kaolin clay within the above referenced proportions to yield solid materials of particularly excellent properties, especially transverse strength and heat insulating properties.

In a preferred embodiment, the material may be blown into shape between mixing and subjecting to heat. For this purpose, a mould is provided and the mixture is blown into the mould at a pressure so as not to crush the perlite and achieve an ultimate bulk density of 13.0 to 14.0 lb., i.e., a pressure of 70 to 115 lb. per square inches is preferred with 75 to 85 being the optimum. In addition, sufficient water is utilized to assure full saturation of the mixture prior to blowing, preferably 21 to about 67 parts of water are employed.

In accordance with another important aspect of the invention, the mixture is solidified after blow moulding by exposing the mixture to carbon dioxide gas under pressure. The carbon dioxide is supplied to the structure within the mould under a gauge pressure 75 to 85 lb. per inch of thickness of the blow moulded shape.

In accordance with another important aspect of the invention, the step of curing is accomplished by microwave heating of the blow moulded shape.

In accordance with another important aspect of the invention, the blow moulded structure includes a tongue and/or a groove so as to permit the assembly of mating shapes.

In accordance with yet another important aspect of the invention, the mould into which the mixture is blow moulded includes a venting area. The venting area extends generally parallel with the maximum dimension of the moulded shape. The blow moulded shape may comprise a block or a semi-cylinder.

In the alternative, the blow moulded shape may comprise an elbow-shaped structure where the venting area is located at one end of the elbow. Preferably, the venting area comprises at least 20% of the overall external area of the blow-moulded shape.

Brief Description of the Drawings

Figure 1 is a diagram illustrating the thermal conductivity of the material of the invention;

Figure 2 is an exploded perspective view of the material of this invention formed into hollow tubular configuration;

Figure 3 is a sectional view of the tongue and grooving in another embodiment of the invention;

Figure 4 is another sectional view of the tongue and grooving in yet another embodiment of the invention, and

Figure 5 is a sectional view of a tongue and grooving of still another embodiment of the invention.

Figure 6 is a diagram illustrating the dependence of transverse strength upon phosphate concentration in the compositions of the invention.

Figures 7_a_ to _d_ are perspective sequential views of a blow-moulding apparatus which may be utilized in practicing the invention.

Figure 8 is an exploded perspective view of the mould shown in Figures 7<u>a</u> to <u>d</u> including a blow-moulded product.

Figure 9 is a perspective view of another mould utilized in blow-moulding another product or shape.

Figure 10 is an exploded perspective view of the mould of Figure 9.

Figure 11 is a perspective view of a shape or product made with the mould of Figures 9 and 10.

Figure 12 is an exploded perspective view of a mould similar to that shown in Figures 9 and 10 for making the moulded product as shown in the perspective view of Figure 11.

Figure 13 is a perspective view of another mould which may be utilized in practicing this invention.

Figure 14 is an exploded perspective view of the mould shown in Figure 13.

Figure 15 is a sectional view of the mould shown in Figure 13 taken along line 16-16.

Figure 15<u>a</u> suggests a modification suitable for the fabrication of tongue and grooved shapes.

Figure 16 is a perspective view of a product made from the mould shown in Figures 13 to 15.

## Detailed Description of Preferred Embodiments

The material of the present invention starts out ultimately as a mix of the following by weight:

expanded perlite from about 20 through about 50 parts, preferably 29 through 45 parts, with 36 through 42 representing an optimum;

sodium silicate or potassium silicate as an aqueous solution including 9.5 through 19 parts, preferably 11.5 through 18 parts, solids content of sodium or potassium silicate with 14.5 through 16.5 representing the optimum;

an amount sufficient to improve the transverse strength of a phosphate, said phosphate being substantially soluble in the aqueous silicate, with from 0.05% to about 5% and especially from about 0.1% to about 2.0% being preferred, and from 0.3% to about 1.5% being still more preferred;

water, to make a total of water, including any that may be associated with the sodium silicate, of 21 through 67 parts, preferably 26 through 57, with 32 through 43 representing the optimum.

Optionally, the mixture may include a clay in an amount of from about 20% to about 25% and more preferably from about 21% to about 24% of the total weight of the silicate solids and the clay. Additionally, fiberous materials may be added in amounts ranging from about 0.5 to about 3 parts by weight. The perlite may, preferably, be of low density, it may have a density below about 2.5 pounds per cubic foot.

The mixture may be obtained by mixing the expanded perlite, the clay and the fiberous material together in solid form and separately mixing the sodium or potassium silicate in a solution of preferably from about 35° to about 43° Baume with from about 36° to about 41° being preferred. This liquid mixture is, in turn, mixed in with the powder. The mixing is then continued up at least to the time the mix appears damp and dust-free, but not up to the time the mix starts to shrink substantially and to compact. Silicate solutions having a lesser gravity tend to form watery products, while use of higher gravity solutions tends to deflate the mixtures prior to shaping, and tends to give products of poor strength.

Various mixing devices, such as a planetary batch mixer, or a continuous screw feed mixer, are suitable for the mixing, a pug mill batch mixer also being suitable. A mixer known as a "Patterson-Kelly Cross-Flow"™ mixer is preferred.

The material is then compressed by a ram or by vibra-

BAD ORIGINAL

tion, into the shape in which it will ultimately be wanted. Another less preferred way of bringing it into shape is to put part of the material into a mould or the like, compress that part and then put in part or all of the additional material, compress it, and so on.

The shaped material is then heated to cure it, this being preferably done in a microwave oven. A conventional oven utilizing hot air may also be employed. According to a preferred embodiment, the shaped material may be cured by exposing it preferably while still in the mould, to heated carbon dioxide gas in a fashion well-known to those skilled in the foundry art. Alternatively, the body while still in the mould, may be heated, or the body may be placed on a heated surface to effect cure. Any means whereby a curing or "setting" of the shaped body into a rigid article is suitable, and all are forseen hereby. Similarly, any temperature which is sufficient to cause curing is suitable. For example, use of $CO_2$ gas heated to about 450°F (232°C) for about 30 seconds works well for moderate sized articles.

Employment of carbon dioxide gas to effect setting of the shaped material is particularly beneficial in that such employment leads to insulating materials having improved resistance to degradation by water. In view of the benefits to be had from such water insensitivity, the use of $CO_2$ curing is to be preferred.

The fiber material may comprise a class of organic or inorganic materials including fiberglass. A heat resistant nylon-type fibrous material, such as poly (1,3-phenylene isophthalamide), sold commercially under the tradename Nomex, can be used as may fiberglass. A preferred fiber is a member of the class of polyesters. Less preferably, mineral wool, such as rockwool; cotton or wood fibers may also be used. The amount of fiberous material may range from about 0.5 parts to about 3 parts by weight. The fiberglass or other fiberous material is in the form of a floc - that is, a set of fibers having short lengths, averaging preferably $\frac{1}{8}$ through $\frac{1}{4}$ inch long and most preferably averaging about $\frac{1}{4}$ inch long.

The class of fiber material may also include netting which may be organic or inorganic materials including polypropylene, polyester, nylon or Dacron.

The netting comprises fibers of a thickness in the range of 0.007 to 0.125 inch, openings having areas in the range of 0.06 to 1 square inch and weight of less than 2lb. per thousand square feet. The netting strength should exceed 4 grams per denier when subjected to an Instron tester at 65% relative humidity. The openings in the netting may take on a variety of shapes including squares, rectangles, circles or ovals. All fiber materials must be stable at temperatures in excess of 250°F (121°C), i.e., there is no substantial softening below these temperatures.

The expanded perlite should have a dry bulk density of 2 through 8lb. per cubic foot, preferably less than about 3½ lb. per cubic foot, and even more preferably below about 2½ lb. per cubic foot. The perlite is a complex sodium potassium aluminum silicate volcanic granular glass. Its screen sizing should be AFS (American Foundry Society) average screen size designation of 70 through 120 and preferably 110. A perlite with 25% maximum contaminants including no more than 0.5% each of Fe of Ca and no more than 0.1% of each of arsenic, barium, beryllium, boron, chlorine, chromium, copper, gallium, lead, manganese, molybdenum, nickel, sulphur, titanium, yttrium and zirconium is most suitable. Expanded perlite includes all perlite made from naturally occurring perlite sand which is expanded by heat. The fusion temperature is in excess of 2300°F (1260°C) and has a solubility of less than 1% in water, less than 10% in 1N.NaOH and less than 3% in mineral acids.

The sodium or potassium silicate should become part of the mix in the form of a water solution capable of being handled in a practical manner. Any commercially available solution will suffice but it is preferred that its ratio of silicon dioxide to sodium oxide should be in the range of 3.1 to 1 through 3.4 to 1, and most preferably about 3.22 to 1, and it should have a solids content preferably in the range of 36% through 44%, and most preferably about 38%. An example of a suitable sodium silicate grade to use is the N grade sold by Philadelphia Quartz. Where potassium silicate is used, the ratio of silicon dioxide to potassium oxide should preferably be in the range of 2.0 to 1 through 2.7 to 1 with a solids content of 24 to 35%. For best fabrication, the silicate should have a specific gravity of from about 35° to about 43° Baume and preferably from about 36° to about 41° Baume.

The clays suitable for inclusion in the mixtures of this invention include a wide variety of hydrated aluminum silicates having irregularly shaped crystals and being capable of absorbing water to form a plastic, mouldable, mass or thixotropic gel. Of these, Bentonite and Kaolin are preferred with Kaolin being most preferred. It has been found that amounts of clay equal in weight to about 20% to about 25% and more preferably from about 21% to about 24% of the total weight of the silicate and the clay is suitable.

The phosphates useful for the practice of the invention are quite broad in scope. Any phosphate which is substantially water soluble at modest temperatures may be so employed. More particularly, it is convenient to utilize such phosphates which are soluble in the aqueous silicate solutions used in the practice of the invention. Of the many phosphates which are, thus, suitable, the mono-, di-, and trisodium and potassium phosphates are both suitable and commercially accessable, and hence, are preferred. All other water soluble phosphates are similarly suitable, however. The phosphates may be employed in the embodiments of this invention in amounts ranging from about 0.05% to about 5% by weight of the mixture with about 0.17% to about 2.0% being preferred, and about 0.3% to about 1.5% being more preferred.

BAD ORIGINAL

The addition of soluble phosphate to the mixtures of this invention results in substantial increases in the transverse strength of the resulting solid materials. In actual experience, the addition of from 0.3% to about 1.5% by weight of such phosphate increases the transverse strength from about 10% to 20%. This very substantial increase in strength does not continue with increasing phosphate loading. Thus, amounts over about 2% tend to decrease the transverse strength characteristics.

The curing or drying step, can well take place in an oven, for example in an electric or other conventional oven with air circulating within it. In such a case, the piece of material being subjected to the heating should be so supported that the maximum area of the piece will have direct access to the air in the over. For example, a piece with relatively longer and shorter dimensions should be supported with its longest dimension in the vertical direction, which will achieve this result and also tend to prevent warping. Dehydrating and

BAD ORIGINAL

otherwise curing the material can also be accomplished by the use of microwave energy in heating devices such as ovens, which have a capability of securing the result in a much shorter time, for example for some time such as five minutes to the inch of minimum dimension or maximum thickness. Use of this has been found on the average to enhance the strength more than 20% as compared to using a conventional oven.

A preferred embodiment employs the injection of carbon dioxide gas heated to an elevated temperature into the mould wherein is held the shaped body. A temperature of about 450°F (232°C) for the $CO_2$ has been found to be useful with an exposure time of about thirty minutes. Alternatively, the body may be heated conductively either by placing the mould containing the shaped body in an oven or by placing the body on a heated surface. Temperatures of about 450°F (232°C) oven times of about thirty minutes to two hours have been shown to be useful for moderately sized articles.

The material will provide solid rigid shapes suitable for enclosing and insulating hot pipes, furnace outer walls, oven walls, cold pipe and walls, fittings and valves.

The ability of the material to hold solid rigid shape and smoothness of the material allows the material to be formed for making a tongue and groove or mitred joints such as that shown in Figures 2 to 5. As shown in these Figures, the tongues 10(a to d) and the grooves 12(a to d) in surfaces 14 may take on various shapes, some of which are fairly intricate. However, due to the ability of the material to hold its shape and the relative smoothness of the surfaces, appropriate mating of the tongues and grooves is assured. As shown in Figures 2 to 5, the material may comprise a hollow tubular configurations having a plurality of two or more segments 16 which include the tongues and grooves 10(a to d) and 12(a to d) in the surface 14 which extend parallel to the axis of the tubular configuration. However, it will be appreciated that the tongues and grooves may be utilized in planar sheets and other configurations such as might be required to accommodate the configurations of furnaces, fittings, valves and oven walls, etc. It will be noted that the dovetailed tongues and grooves of Figure 5 permit the two segments to be joined without benefit of straps.

In accordance with an important aspect of this invention, the materials set forth in the foregoing example may be blow moulded in accordance with the method and apparatus which will now be described with reference to Figures 7a to d. The core blowing apparatus of Figure 7a comprises a hopper 100 having a head 102 which is secured to the hopper 100 by bolts 104. The head 102 mates with a two-piece mould 106 which is adapted to be clamped between faces 108 and 110 which are adapted to move in the directions indicated by the arrows 112 and 114 respectively. As will be explained subsequently in somewhat more detail, the faces 108 and 110 include manifolds for supplying carbon dioxide to the mixture within the mould for purposes of solidifying the mixture prior to curing. The carbon dioxide is supplied through tubes 116 and 118 to both faces 108 and 110. This occurs after the mould 106 is elevated by a platform 120 to a position of engagement with the head 102 as shown in Figure 7b in a direction generally indicated by an arrow 122.

As shown in Figure 7b, the head 102 includes screens 124 which communicate with the interior of the mould so as to provide the mould with a venting area which is coupled to openings 126. An additional venting area 128 having a venting screen 130 is provided at the bottom of the mould. As also shown in Figure 7b, the clamping faces 108 and 110 are held in place against the sides of the mould 106 so as to place the carbon dioxide manifolds of the faces 108 and 110 in communication with carbon dioxide openings 132 which are covered by screens 134.

The introduction of the perlite/silicate mixture 136 into the mould 106 is shown in Figure 7c. In this regard, it will be appreciated that the mixture 136 is in effect forced into the mould 106 in front of a blast of air which drives the mixture 136 to the bottom of the mould toward the venting area 128. As a consequence, any air trapped within the mould 106 is forced outwardly through the screen 130 as depicted by arrows 138. Simultaneously, air trapped within the mould 106 escapes through screens 124 associated with openings 126 in the head 102 as depicted by arrows 140. Note also in Figure 7c communication of the manifolds 142 in each of the faces 108 and 110 for purposes of passing carbon dioxide from the tubes 116 and 118 to the blow-moulded shape. As shown in Figure 7d, the blow-moulded shape 144 is fully formed and carbon dioxide is emitted to the shape 144 through the manifolds 142 of the faces 108 and 110 as depicted by arrows 146.

In accordance with this invention, the air pressure which introduces the mixture 136 into the mould 106 must be sufficiently high so as to achieve the desired density of the mixture without crushing perlite. In this connection, a pressure of 80 to 115 lb. per square inch has been found to be desirable with a pressure of 75 lb. to 85 lb. per square inch preferred. The carbon dioxide which is applied to the moulded shape 146 is introduced at a pressure of at least 20 to 50 lb. per inch of thickness of the moulded shape and preferably 25 lb. per inch of thickness.

Referring now to Figures 8 to 8c, the mould 106 is shown as comprising two separable parts 150 and 152. As shown in Figure 8, the venting areas and in particular the venting screens 130 and 134 extend generally parallel with the maximum dimension of the moulded shape 146. It will also be seen that a plurality of venting openings 126 are provided which communicate with these screens 124. It will also be seen that the perlite/silicate mixture enters the mould through an opening 154 in the head 102 which also extends generally parallel with the maximum dimension of the material. Note also that the direction of blowing into the mould 106 is generally vertical. This is desirable because of the relatively light nature of the mixture 136.

As also shown in Figures 7a to d and Figures 8 to 8c, carbon dioxide is introduced in a direction generally transverse to the flow of the mixture and to the mould. In other words, the flow of carbon dioxide into the moulded shape 146 is in a direction generally parallel with the minimum dimension of the moulded shape. As best shown in Figure 8, the carbon dioxide openings covered by the screens 134 are generally arranged so as to provide substantial coverage of the surfaces of the blow-moulded shape 146. This is achieved by an essentially circular array of openings 156 shown in Figure 8 which communicate with the manifold 142 of the faces 108 and 110. Note also the holes 158 in the head 102 which are adapted to receive bolts shown in Figure 8c.

It has been found that the total venting area of the moulds is critically related to the perlite/silicate mixture. In general, it is desirable to have the total venting area of the mould equal at least 20% of the overall surface area of the moulded shape and preferably at least 25%. It has also been found that the overall area for applying carbon dioxide to the moulded shape should be equal to at least 20% and preferably 25%. In this connection, it will be understood that the overall areas of the screens 124 and 130 are equal to at least 20% of the overall surface area of the moulded shape 146. Similarly, the overall area of the screens 134 are equal at least 20% of the overall surface area of the moulded shape 146.

Referring now to Figures 9 and 10, a mould for forming an elbow 200 shown in Figures 11 and 11a will now be described. The mould 202 comprises two pieces 204 and 206. The mould 202 includes an opening 208 adapted to mate with a core blowing head for introducing the perlite/silicate mixture into the mould 202. A venting opening 210 is provided which is covered by a screen 212. In addition, an opening 214 is provided in the piece 202 for introducing carbon dioxide through a screen 216 to the moulded shape of the perlite/silicate mixture.

In certain instances, it may be desirable to provide a moulded shape 200 with a jacket 218 shown in Figure 12. In order to achieve the jacketed elbow shown in Figure 11a, the carbon dioxide may be introduced through the mould piece 204 rather than the mould piece 202 through an opening 220 shown in Figure 12. The jacket 218 is initially received in the depression of the mould piece 202.

BAD ORIGINAL

Reference will now be made to Figures 13 through 16 for a disclosure of the method and apparatus for blow moulding a semicylindrical shape. A mould 300 comprising a first piece 302, a second piece 304 is utilized to achieve the blow moulded semicylindrical shape 306 shown in Figure 16. The mould piece 302 includes elongated opening 308 which is adapted to cooperate with a head not shown for introducing a perlite/silicate mixture into the mould 300. The elongated venting openings 310 shown in Figure 15 are covered by screens 312. The openings 310 extend generally parallel with the maximum dimension of the shape 306.

As also shown in Figures 13 through 15a, opening 314 is provided at the ends of the mould 300 for introducing carbon dioxide into the mould 300 through screens 316.

In the embodiments of Figures 9 through 12 and Figures 13 to 16, it has also been found desirable that the total venting area of the mould be equal at least 20% of the overall surface area of the moulded shape preferably at least 25%. It has also been found that the overall area for applying carbon dioxide to the moulded shape should be equal to at least 20% and preferably 25%. It has further been found that carbon dioxide should be applied to the pressure of 20 to 50 lb. per square inch of the thickness of the moulded shape 200 and 306.

It will be appreciated and that the various moulds shown in Figures 7 a to d, 8, 9, 10, 12 and 13 to 15a may include provisions for forming the tongues and grooves shown in Figures 2 to 5. Such tongues and grooves represent the preferred embodiment of the invention; a modification for forming shapes having tongues and grooves is suggested by Figure 15a, which provides protruberances, 118, for that purpose.

In the foregoing, the expression blow moulding has been utilized. In a preferred form, such blow moulding is of the core shooting type where air or another fluid forces the perlite/silicate mixture from behind to enter the mould. However, it will be appreciated that core blowing involving the mixing of air with the perlite/silicate mixture may also be utilized.

To further illustrate the invention, the following nonlimiting examples are given.

Example 1

Expanded perlite having a bulk density of 2.3 lb./ft.$^3$ (0.89 lb.), 0.334 lb. of Kaolin clay, and 0.034 lb. of polyester fibers where mixed together. Sodium silicate (N-grade of PQ Corp.), 1.10 lb. was separately mixed with 50 ml of water (0.110 lb.) and varying amounts of trisodium phosphate. The aqueous solution was then mixed with the solids until a dustless condition was evidenced. The mixtures were press-formed into blocks having dimensions of 12" x 12" x 1½". These were exposed to $CO_2$ gas at 45 psi for ten seconds and cured in a microwave at 13k.w. for ten minutes or until thoroughly dry. These blocks were tested according to A.S.T.M. Standard C-203 "Breaking Load and Calculated Flexural Strength of Pre-Formed Block Type Thermal Insulation." The data this collected is reproduced below and presented graphically in Figure 6.

| gms. | Phosphate % | Breaking Load (lb.) | Flexural Strength (lb./in.) |
|---|---|---|---|
| 0.0 | 0.0 | 24.5 | 54.44 |
| 1.19 | 0.12 | 25.8 | 57.33 |
| 2.5 | 0.24 | 25.5 | 56.67 |
| 3.5 | 0.32 | 26.1 | 58.00 |
| 4.76 | 0.40 | 29.8 | 66.22 |
| 5.95 | 0.52 | 31.62 | 70.27 |
| 8.92 | 0.76 | 32.00 | 71.11 |
| 11.90 | 1.04 | 27.1 | 60.22 |
| 17.85 | 1.55 | 26.6 | 59.11 |
| 23.80 | 2.06 | 25.8 | 57.33 |

This example demonstrates the criticality of employing phosphate in a limited range. More particularly, the increase in flexural strength of perlite-silicate insulation materials provided by the addition of phosphate is demonstrated to be dependent upon a critical range of phosphate concentration.

Example 2

The procedure of Example 1 was used to construct 8 inch square and round shapes for determination of thermal conductivity. The following composition was employed:

| | |
|---|---|
| Perlite | 0.9 lb. |
| N-Grade Silicate | 0.82 lb. |
| Fibers | 0.0157 lb. |
| Kaolin | 0.1752 lb. |
| Trisodium Phosphate | 0.010 lb. (0.4%) |
| Water | 0.270 lb. |

The thermal conductivity is illustrated in Figure 1.

BAD ORIGINAL

0047675

## CLAIMS

1. A process of making a coherent rigid solid material from a mixture including expanded perlite, sodium or potassium silicate and water comprising the following steps:

blow moulding the mixture to a desired shape and curing the mixture in the blow moulded shape by heating.

2. A process of forming a coherent, rigid solid shaped material comprising .

1. mixing together a mixture comprising by weight a) from about 20 to about 50 parts of expanded perlite,

b) from about 9.5 to about 19 parts of sodium or potassium silicate in the form of an aqueous solution thereof,

c) an amount sufficient to improve the transverse strength of said material of a phosphate, said phosphate being capable of substantially dissolving in said aqueous solution, and

d) from about 21 parts to about 67 parts of water including that found in said aqueous solution,

2. blow moulding said mixture into said shape, and

3. curing said moulded mixture by heating.

3. A process as claimed in claim 1 or claim 2 including the step of solidifying the mixture after blow moulding and before curing by exposing the mixture to carbon dioxide gas under pressure.

4. A process of claim 3 wherein the carbon dioxide is under a gauge pressure of 15 pounds per inch of thickness of the moulded shape.

5. A process as claimed in claim 1 wherein the blow moulding forms a tongue in the shape.

6. A process as claimed in claim 1 wherein the blow moulding forms a groove in the shape.

7. A process as claimed in claim 1 wherein the blow moulding forms a tongue and groove in the shape.

8. A process as claimed in claim 1 or claim 2 wherein the step of curing by heating comprises microwave heating the blow moulded shape.

9. A process as claimed in any preceding claim wherein the step of blow moulding comprises blowing air behind the mixture into the mould toward at least one venting area.

10. A process as claimed in claim 9 wherein said venting area extends generally parallel with the maximum dimension of said material.

11. A process as claimed in claim 9 wherein said solid material comprises a block, said air and said mixture entering said mould at an inlet area extending in a direction generally parallel with the maximum dimension of said material toward a venting area also extending in a direction generally parallel with said maximum dimension of said material.

12. A process as claimed in claim 9 wherein said solid material comprises a semi-cylinder, said air and said mixture entering said mould at an inlet area extending in a direction generally parallel with the maximum dimension of said material toward a venting area also extending in a direction extending generally parallel with said maximum dimension of said material.

13. A process as claimed in claim 9 wherein said solid material comprises an elbow-shaped structure, said air and said mixture entering said mould in an inlet area at one end of said mould toward a venting area at the other end of said mould.

14. A process as claimed in any one of claims 3 to 12 wherein said carbon dioxide is introduced into the mould through a carbon dioxide manifold.

15. A process as claimed in any one of claims 3 to 14 wherein said carbon dioxide is introduced into the mould in a direction generally transverse to the flow of said mixture into the mould.

16. A process as claimed in any preceding claim wherein said venting area is at least 20% of the overall external area of said material in said mould.

17. A process as claimed in claim 1 or claim 2 including the step of solidifying the mixture after blow moulding and before curing by introducing carbon dioxide through an opening in an area of at least 20% of the overall external area of said material in the mould.

18. A process as claimed in claim 1 or claim 2 wherein said blow moulding is performed under an air pressure of 75 to 85 lb. per square inch.

19. A process as claimed in claim 2 wherein said phosphate is present in an amount of from 0.1% to 1.5% by weight.

*Fig. 1*

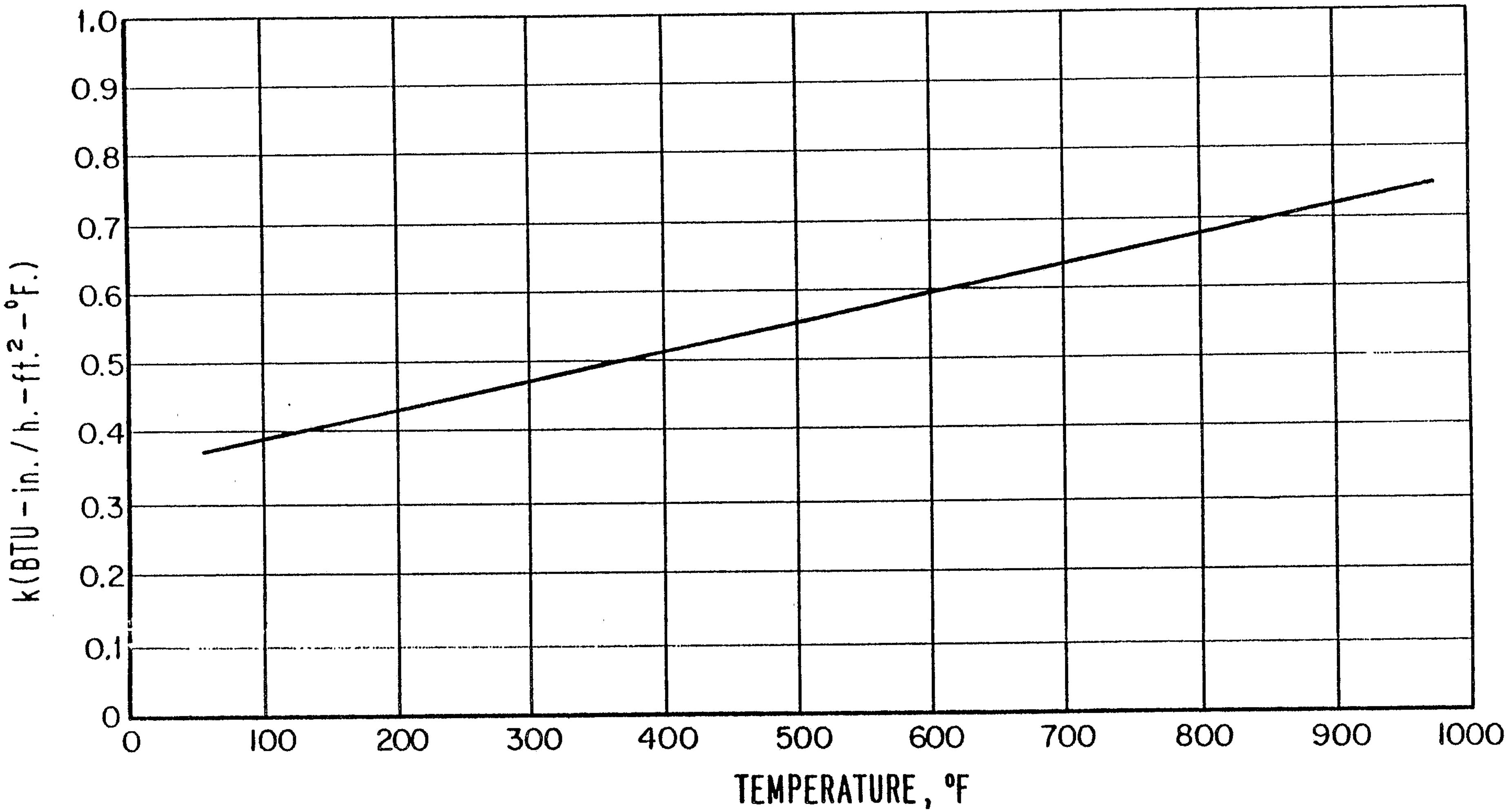

1.0
0.9
0.8
0.7
0.6
0.5
0.4
0.3
0.2
0.1
0
k(BTU - in./h.-ft.$^2$-°F.)
0
100
200
300
400
500
600
700
800
900
1000
TEMPERATURE, °F

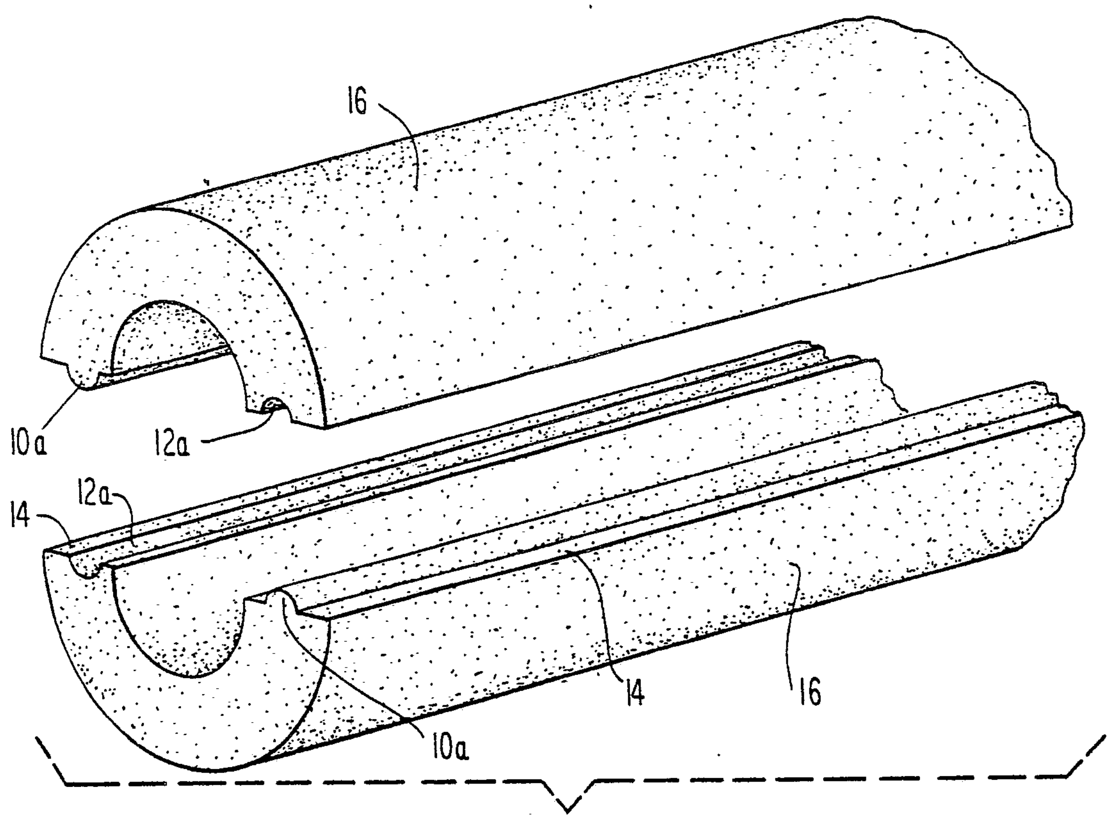


Fig. 2

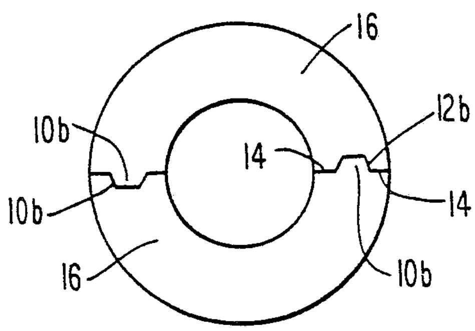


Fig. 3

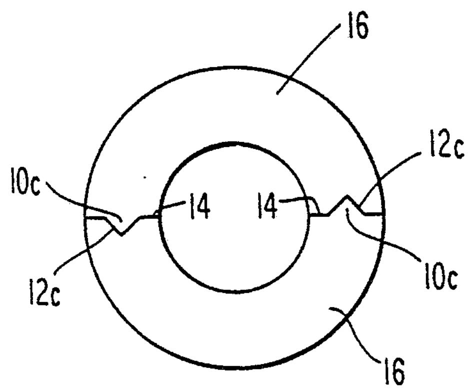


Fig. 4

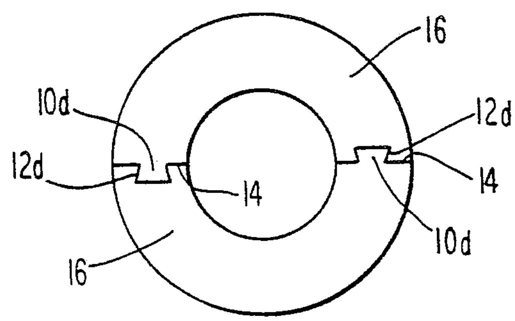


Fig. 5

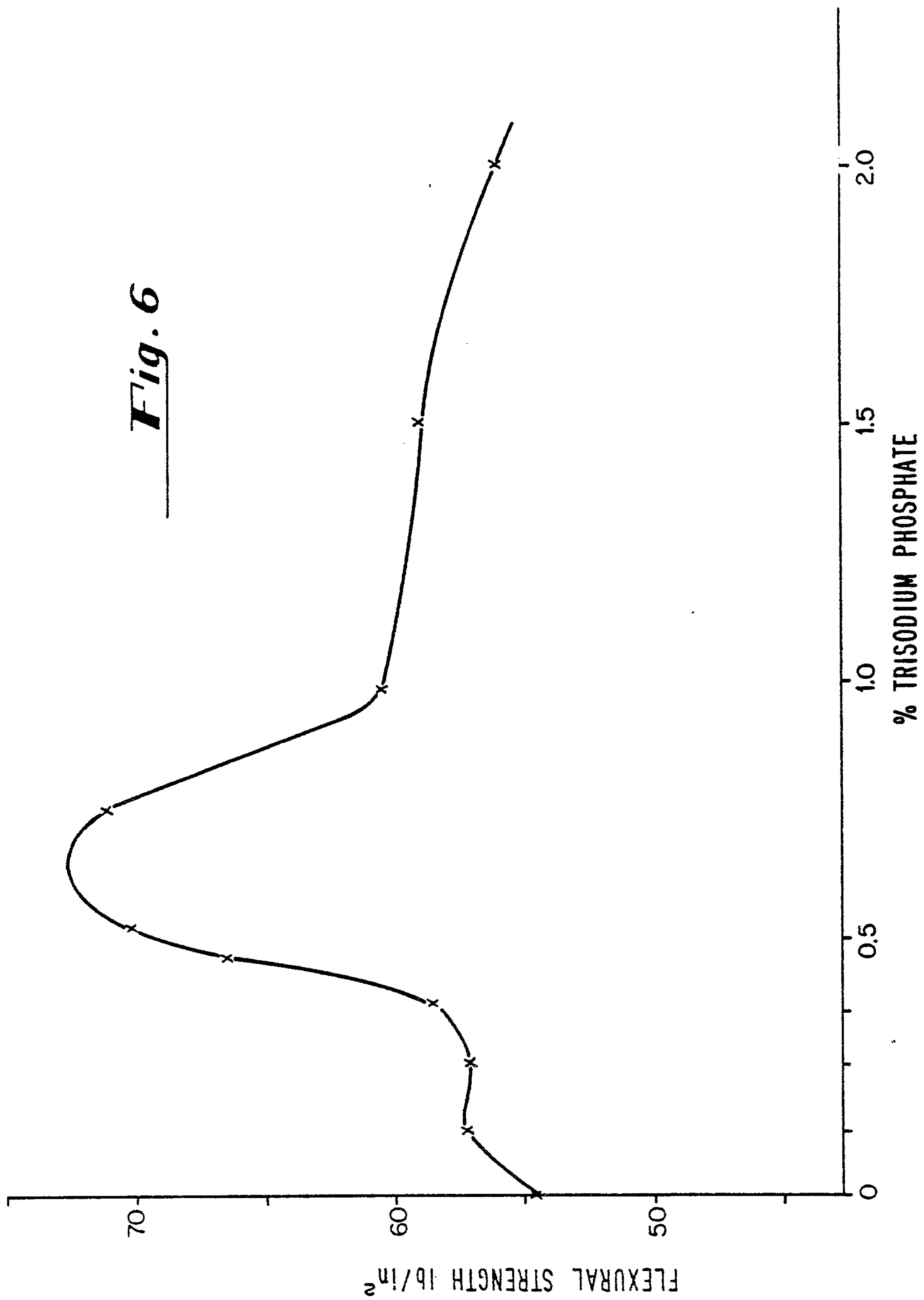
70
60
50
FLEXURAL STRENGTH lb/in²
0
0.5
1.0
1.5
2.0
% TRISODIUM PHOSPHATE

Fig. 6

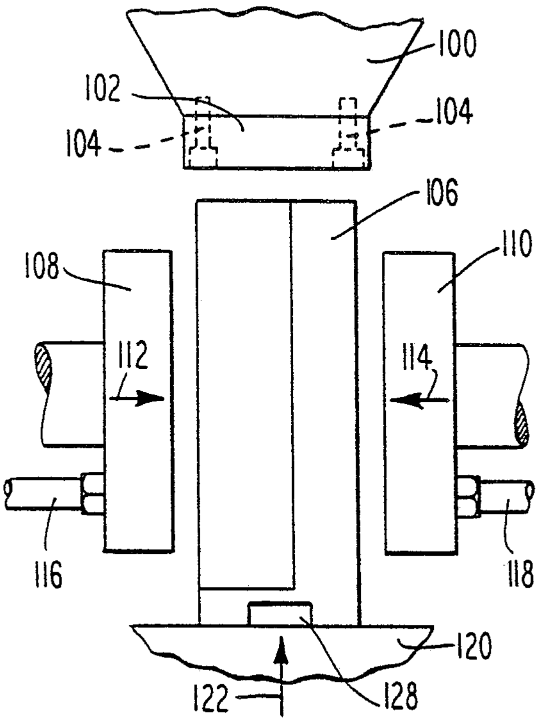


Fig.7a

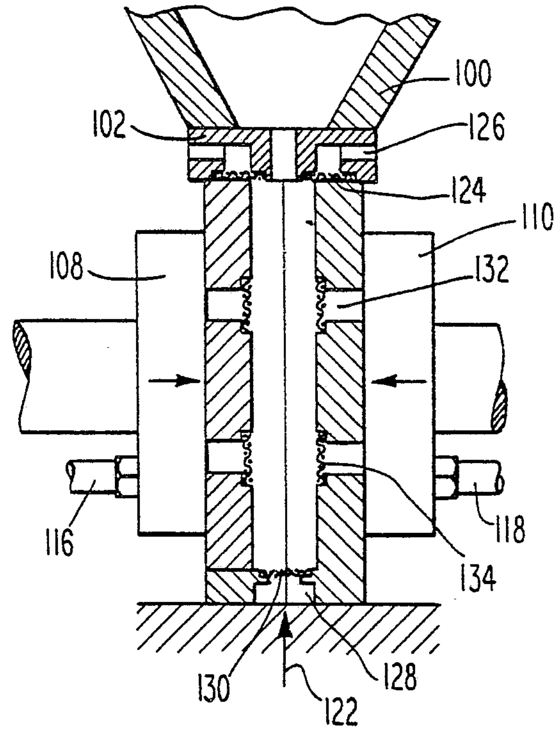


Fig.7b

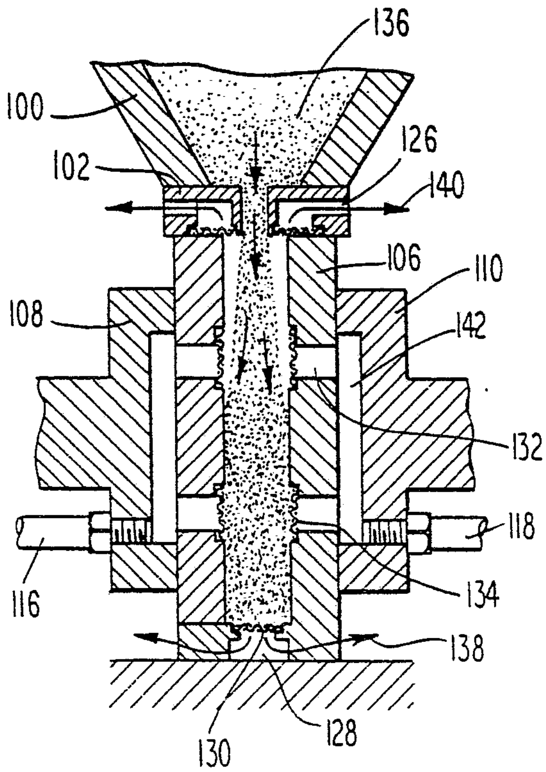


Fig.7c

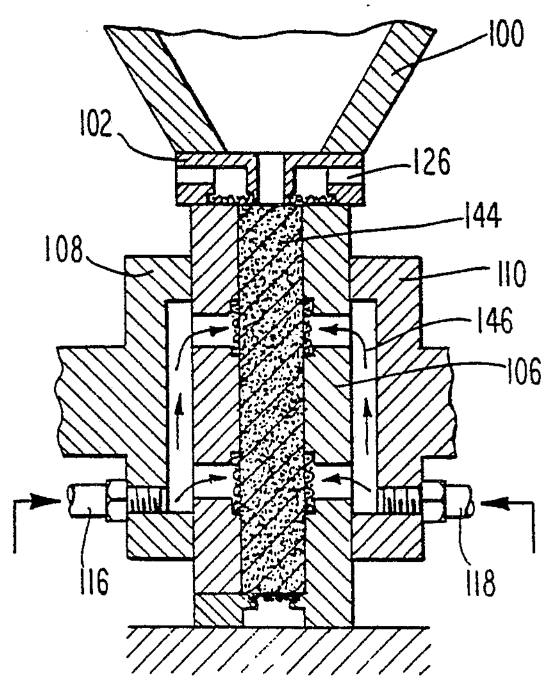


Fig.7d

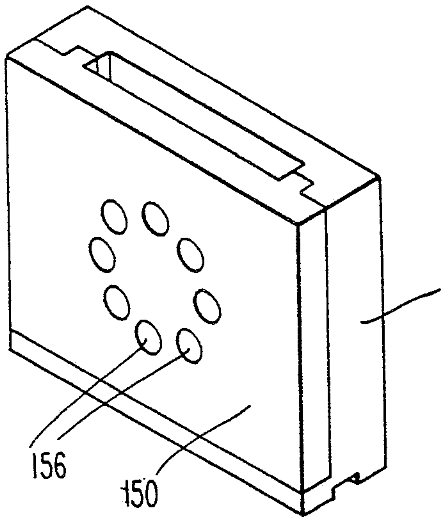


Fig. 8a

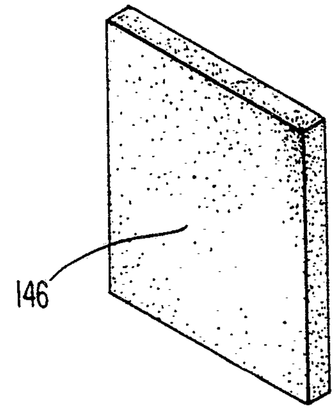


Fig. 8b

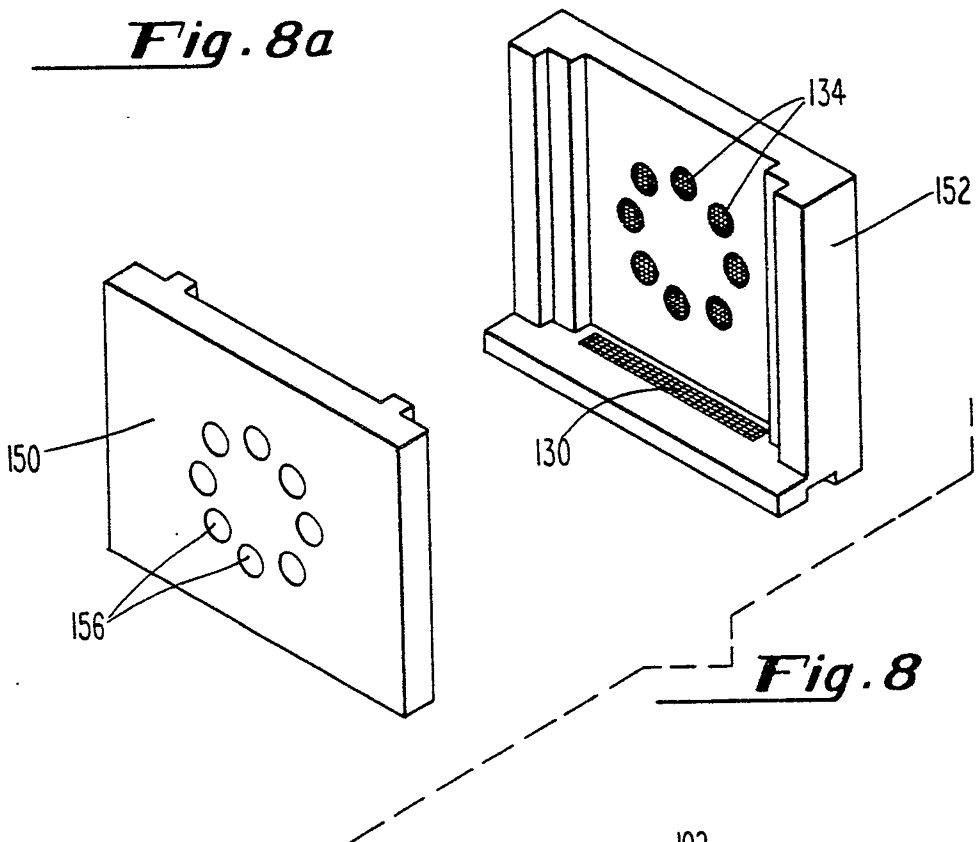


Fig. 8

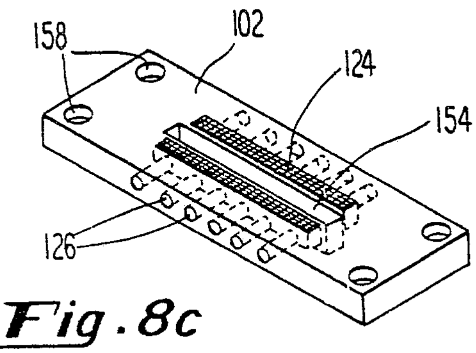


Fig. 8c

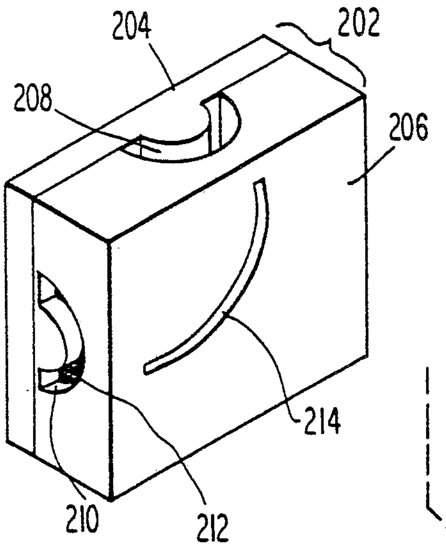


Fig. 9

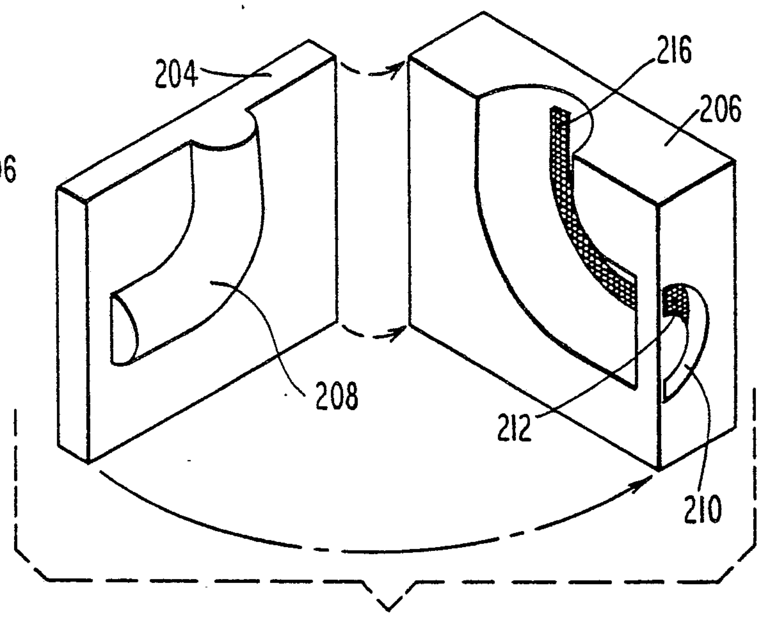


Fig. 10

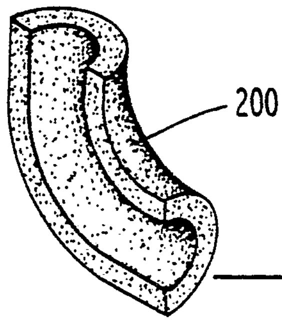


Fig. 11

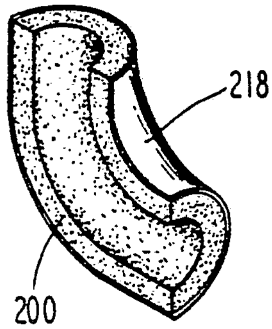


Fig. 11a

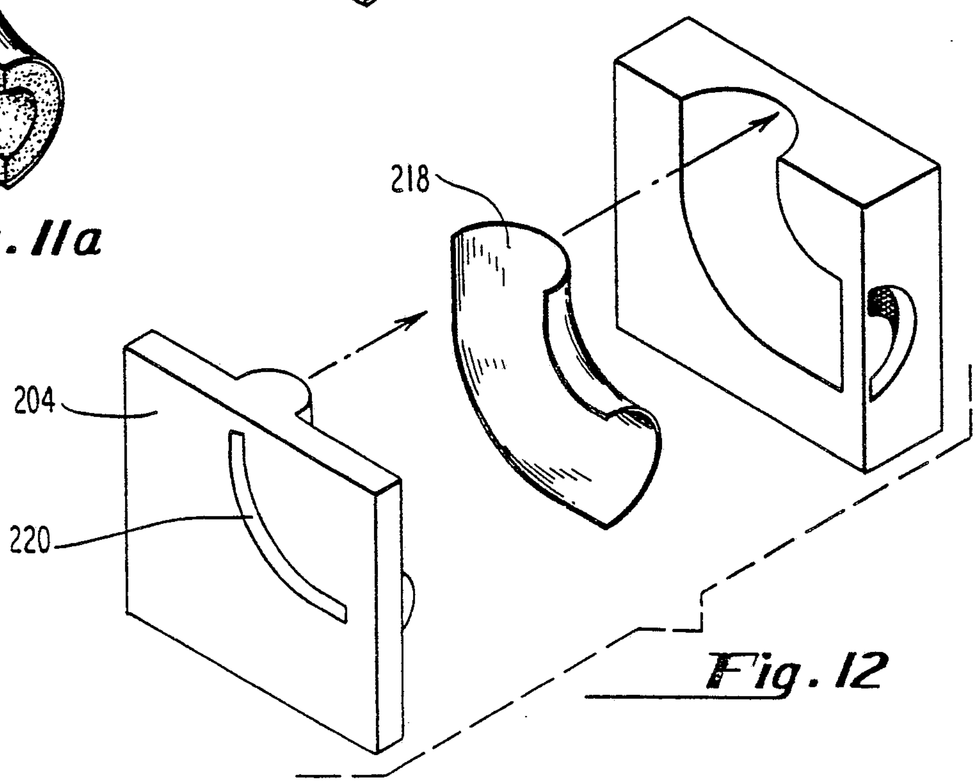


Fig. 12

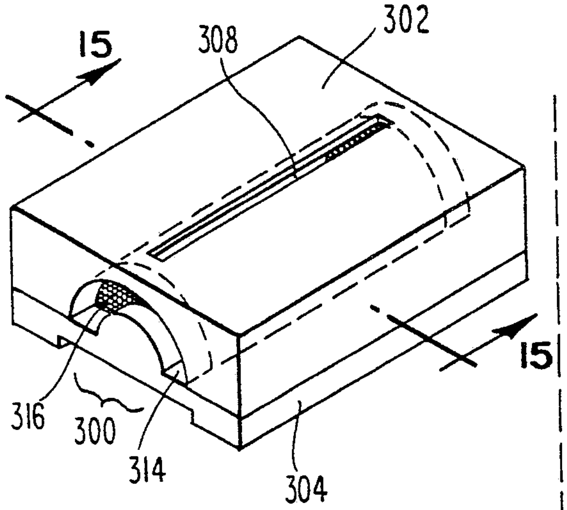


Fig. 13

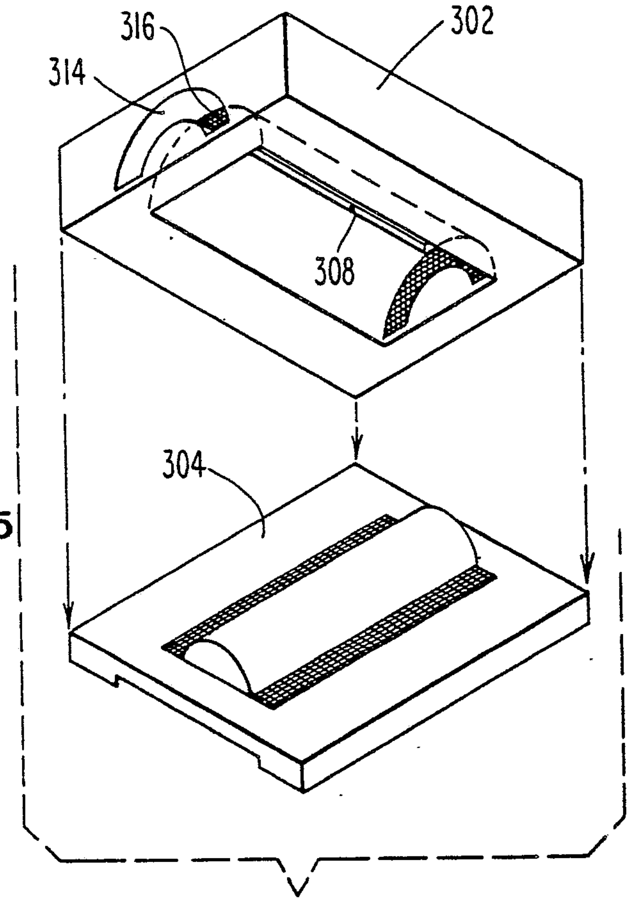


Fig. 14

Fig. 15

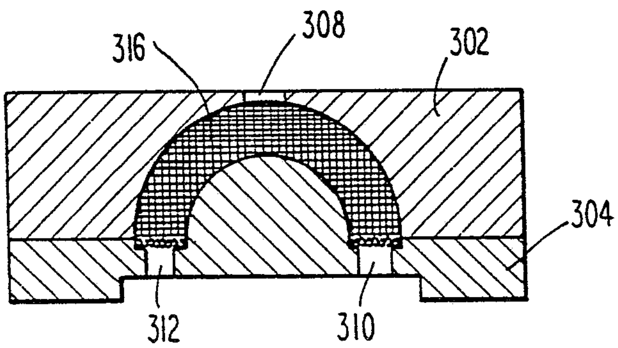


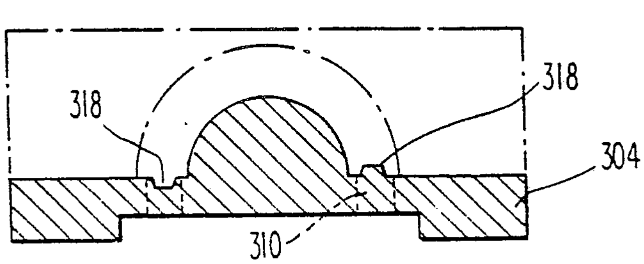


Fig. 15a

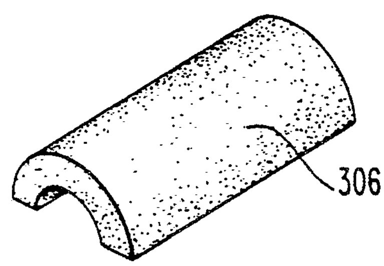


Fig. 16

European Patent Office

# EUROPEAN SEARCH REPORT

0047675

Application number

EP 81 30 4134.0

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - A1 - 2 813 745 (LEBANON STEEL FOUNDRY et al.)<br>* claims 1, 32 *<br>-- | 1,4-9 | C 04 B 19/04<br>C 04 B 21/08<br>F 16 L 59/02 |
| A | US - A - 4 122 231 (KISHI)<br>* claim 1 *<br>-- | 2 | |
| A | US - A - 3 886 076 (VENABLE)<br>* claims *<br>-- | 2 | **TECHNICAL FIELDS SEARCHED (Int. Cl.3)** |
| A | "Soviet Inventions Illustrated<br>Week C 08, 2 April 1980<br>Section L 02<br>& SU - A - 667 533<br>---- | 2 | C 04 B 19/00<br>C 04 B 21/00<br>C 04 B 31/00<br>C 04 B 43/00<br>F 16 L 59/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 23-10-1981 | HÖRNER |

EPO Form 1503.1 06.78